# EUROPÄISCHE PATENTANMELDUNG

(11) **EP 4 647 471 A1**
(43) Veröffentlichungstag der Anmeldung: **12.11.2025**
(21) Anmeldenummer: 24174903.5
(22) Anmeldetag: 08.05.2024
(51) Int. Cl.: C09D 7/40, C09D 183/04

(54) **BODENSCHUTZSYSTEM ABGESTREUT MIT BIOBASIERTEM GRANULAT**

(71) Anmelder: Sika Technology AG, 6340 Baar (CH)
(72) Erfinder: VIAS PARRADO, Ana, 70499 Stuttgart (DE); SUSSMANN, Uwe, 71638 Ludwigsburg (DE); NIETHAMMER, Matthias, 73079 Süssen (DE); SARIOGLU, Oguz, 74078 Heilbronn (DE); PUSEL, Thomas, 71282 Hemmingen (DE)
(74) Vertreter: Sika Patent Attorneys

(57) **Zusammenfassung**

Gegenstand der Erfindung ist eine Methode zur Applikation eines Bodenschutzsystems, umfassend die Schritte
(i) Applizieren einer flüssigen Epoxidharz-Beschichtung auf eine Bodenfläche,
(ii) Abstreuen der frisch applizierten, noch flüssigen Epoxidharz-Beschichtung mit einem biobasierten Granulat **G1,**
(iii) Aushärten der abgestreuten Beschichtung bei Umgebungsbedingungen,
(iv) gegebenenfalls gefolgt von mechanischem Entfernen von nicht in die Beschichtung eingebundenem biobasiertem Granulat **G1,**
wobei das biobasierte Granulat **G1** eine Partikelgrössenverteilung von 0.2 bis 2 mm und einen volumenbasierten d⁵⁰-Wert von 0.3 bis 1.3 mm aufweist.

Das Abstreuen mit dem biobasierten Granulat **G1** ermöglicht eine überraschend ebenmässig strukturierte Oberfläche, welche mit handelsüblichen Epoxidharz-Versiegelungen sehr gut überstreichbar ist. Das versiegelte Bodenschutzsystem verfügt über eine robuste, rutschhemmende Oberfläche mit überraschend hoher Abrasionsfestigkeit auf dem Niveau eines entsprechenden, mit Quarzsand abgestreuten Bodenschutzsystems.

## Beschreibung

### Technisches Gebiet

Die Erfindung betrifft das Gebiet der flüssig applizierten, mit Granulat abgestreuten rutschhemmenden Epoxidharz-Bodenschutzsysteme.

### Stand der Technik

Bodenschutzsysteme auf Epoxidharz-Basis sind bekannt. Sie eignen sich insbesondere für Brücken, Rampen, Parkdecks oder Industriehallen, wobei die Böden vor Nässe, Tausalz, Reinigungsmitteln und mechanischer Beanspruchung geschützt werden. Um eine gute Rutschhemmung zu erreichen, kann die frisch applizierte, noch flüssige Epoxidharz-Beschichtung mit Quarzsand abgestreut werden, wobei nicht eingebundener Quarzsand nach der Aushärtung bevorzugt mechanisch entfernt wird. Anschliessend wird die körnige Oberfläche üblicherweise mit einer Epoxidharz-Versiegelung überschichtet. Ein so erhaltenes Bodenschutzsystem weist eine strukturierte Oberfläche auf. Es ist robust und widerstandsfähig gegenüber mechanischer Beanspruchung und verfügt über eine gute Haftung auf Betonsubstraten und zwischen den Schichten. Das Abstreuen mit Quarzsand weist aber auch Nachteile auf. Beim Abstreuen mit Quarzsand können sichtbare Wellen oder Streifen entstehen, sowie Zonen ohne strukturierte Oberfläche aufgrund von zu stark eingesunkenem Sand (Glatzenbildung). Zudem ist Quarzsand ein knapper Rohstoff, welcher nur begrenzt zur Verfügung steht.

Biobasierte Granulate wie beispielsweise Olivenkernmehl sind ökologisch interessante Materialien aus nachwachsenden Quellen. Insbesondere stammen sie aus landwirtschaftlichen Abfällen. Sie werden insbesondere eingesetzt in Produkten für die Körperpflege, im Gartenbau oder in Composite-Materialien.

WO 2024/027960 beschreibt Epoxidharz-Beschichtungen enthaltend ein biobasiertes Granulat mit einer Partikelgrösse ≤ 200 µm, welches Teil der Harz- und/oder der Härter-Komponente ist.

### Darstellung der Erfindung

Aufgabe der vorliegenden Erfindung ist es, flüssig applizierte rutschhemmende Epoxidharz-Bodenschutzsysteme zur Verfügung zu stellen, welche die Nachteile des Standes der Technik überwinden und eine gute Haftung, hohe Härte und hoher Robustheit gegenüber Feuchtigkeit, Chemikalien und mechanischer Beanspruchung ermöglichen.

Überraschenderweise wird diese Aufgabe mit der Methode zur Applikation eines Bodenschutzsystems gemäss Anspruch 1 gelöst. Dabei wird ein biobasiertes Granulat **G1** mit einer Partikelgrössenverteilung von 0.2 bis 2 mm und einem volumenbasierten d⁵⁰-Wert von 0.3 bis 1.3 mm, insbesondere ein Olivenkernmehl, zum Abstreuen einer frisch applizierten, noch flüssigen Epoxidharz-Beschichtung eingesetzt. Die Verwendung eines solchen biobasierten Granulats weist zahlreiche Vorteile gegenüber dem Stand der Technik auf. Das biobasierte Granulat ist insbesondere ein nachwachsendes Abfallprodukt aus einer landwirtschaftlichen Quelle. Beim Abstreuen mit dem biobasierten Granulat entsteht eine überraschend ebenmässig strukturierte Oberfläche weitgehend ohne sichtbare Wellen, Streifen oder Glatzenbildung. Dass das Abstreuen mit dem biobasierten Granulat optisch schönere, ebenmässigere Oberflächen ermöglicht als bei der Verwendung von Quarzsand, ist überraschend und konnte aus dem Stand der Technik nicht abgeleitet werden. Nach dem Entfernen von nicht in die ausgehärtete Beschichtung eingebundenem Granulat ist das Bodenschutzsystem mit handelsüblichen Epoxidharz-Versiegelungen ausgezeichnet überstreichbar, wobei insbesondere weniger Poren als beim Überstreichen von mit Quarzsand abgestreuten Flächen entstehen.

Nach dem Überstreichen mit einer Epoxidharz-Versiegelung verfügt das Bodenschutzsystem über eine hervorragende Haftung zwischen den Schichten, wobei die Chemikalienbeständigkeit und die Wasseraufnahme auf dem gleichen Niveau sind wie für ein entsprechendes Bodenschutzsystem, welches mit Quarzsand anstelle des biobasierten Granulats abgestreut ist. Besonders überraschend ist, dass die Widerstandsfähigkeit gegenüber Abrasion, insbesondere durch Befahren mit Kraftfahrzeugen, ebenfalls auf demselben hohen Niveau ist wie für ein entsprechendes Bodenschutzsystem, welches mit Quarzsand anstelle des biobasierten Granulats abgestreut ist. Aus dem Stand der Technik würde man erwarten, dass ein biobasiertes Granulat mit seiner im Vergleich zu Quarzsand geringeren Härte eine reduzierte Robustheit gegenüber mechanischen Abriebkräften zur Folge hätte.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine Methode zur Applikation eines Bodenschutzsystems, umfassend die Schritte
(i) Applizieren einer flüssigen Epoxidharz-Beschichtung auf eine Bodenfläche,
(ii) Abstreuen der frisch applizierten, noch flüssigen Epoxidharz-Beschichtung mit einem biobasierten Granulat **G1,**
(iii) Aushärten der abgestreuten Beschichtung bei Umgebungsbedingungen, insbesondere bei einer Temperatur von 0 bis 40 °C, bevorzugt 5 bis 35 °C,
(iv) gegebenenfalls gefolgt von mechanischem Entfernen von nicht in die Beschichtung eingebundenem biobasiertem Granulat **G1,**
wobei das biobasierte Granulat **G1** eine Partikelgrössenverteilung von 0.2 bis 2 mm und einen volumenbasierten d⁵⁰-Wert von 0.3 bis 1.3 mm aufweist, bestimmt mittels Siebanalyse nach DIN 66165 (2016).

Als "Olivenkern" oder "Olivenkernschalen" wird im vorliegenden Dokument insbesondere der Rückstand aus Olivenkernschalen nach dem Auspressen oder Extrahieren des Öls aus den Oliven bezeichnet. Ebenso werden als "Cashewnussschalen" im vorliegenden Dokument insbesondere die übrigbleibenden Schalenbruchstücke der Cashewnüsse nach dem Auspressen oder Extrahieren des Cashewnussschalenöls aus den harten Schalen bezeichnet.

Als "lagerstabil" wird eine Zusammensetzung bezeichnet, die bei Raumtemperatur in einem geeigneten Gebinde während längerer Zeit, typischerweise während mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Als "Versiegelung" wird die oberste Schicht einer Bodenbeschichtung bezeichnet (Top Coat).

Mit "Poly" beginnende Substanznamen wie Polyepoxid oder Polyamin bezeichnen Substanzen, die formal zwei oder mehr der in ihrem Namen vorkommenden funktionellen Gruppen pro Molekül enthalten.

Als "Aminwasserstoff" werden die Wasserstoffatome von primären und sekundären Aminogruppen bezeichnet.

Als "Aminwasserstoff-Equivalentgewicht" wird die Masse eines Amins oder einer Amin-haltigen Zusammensetzung, die ein Mol-Equivalent Aminwasserstoff enthält, bezeichnet.

Als "primäre Amingruppe" wird eine Amingruppe bezeichnet, die an einen einzigen organischen Rest gebunden ist und zwei Wasserstoffatome trägt; als "sekundäre Amingruppe" wird eine Amingruppe bezeichnet, die an zwei organische Reste, welche auch gemeinsam Teil eines Rings sein können, gebunden ist und ein Wasserstoffatom trägt; und als "tertiäre Amingruppe" wird eine Amingruppe bezeichnet, die an drei organische Reste, welche auch zu zweit oder zu dritt Teil eines oder mehrerer Ringe sein können, gebunden ist und kein Wasserstoffatom trägt. Als "Molekulargewicht" wird die molare Masse (in Gramm pro Mol) eines Moleküls bezeichnet. Als "mittleres Molekulargewicht" wird das Zahlenmittel Mₙ einer polydispersen Mischung von oligomeren oder polymeren Molekülen bezeichnet. Es wird mittels Gelpermeationschromatographie (GPC) gegen Polystyrol als Standard bestimmt.

Als "Verdünner" wird eine Flüssigkeit bezeichnet, welche die Viskosität einer härtbaren Zusammensetzung zu senken vermag und bei der Aushärtung chemisch nicht ins Polymer eingebunden wird.

Gewichtsprozente (Gewichts-%) bezeichnen Massenanteile eines Bestandteils einer Zusammensetzung bezogen auf die gesamte Zusammensetzung, falls nichts anderes angeben. Die Begriffe "Masse" und "Gewicht" werden im vorliegenden Dokument synonym benutzt.

Als "Raumtemperatur" wird eine Temperatur von 23°C bezeichnet.

Alle im Dokument erwähnten Industriestandards und Normen beziehen sich auf die zum Zeitpunkt der Einreichung der Erstanmeldung gültigen Fassungen.

In Schritt (i) der erfindungsgemässen Methode wird eine flüssigen Epoxidharz-Beschichtung auf eine Bodenfläche appliziert.

Als Bodenfläche geeignet sind insbesondere Böden, welche durch das Bodenschutzsystem vor mechanischer Beanspruchung und/oder der Einwirkung von Nässe, Tausalz, Reinigungsmitteln oder weiteren Flüssigkeiten geschützt werden sollen. Dies sind insbesondere die Böden von Brücken, Rampen, Treppen, Terrassen, Balkonen, Parkdecks, Garagen, Parkhäusern, Industriehallen oder Lagerhallen.

Die Bodenfläche, auf welche die Beschichtung in Schritt (i) appliziert wird, besteht insbesondere aus Mörtel, Beton, Naturstein, Keramik, Holz oder einem Kunststoff, bevorzugt aus Mörtel oder Beton, insbesondere einem sogenannten Estrichmörtel. Dabei kann die Beschichtung in Schritt (i) direkt auf die Bodenfläche appliziert werden, oder es wird vor Schritt (i) ein Primer oder eine Grundierung appliziert, insbesondere ein Primer oder eine Grundierung auf Epoxidharz-Basis.

Die Bodenfläche ist bevorzugt von Sand oder Staub befreit und wurde gegebenenfalls vorgängig abgeschliffen oder sandgestrahlt.

Weiterhin bevorzugt ist die Applikation der Beschichtung in Schritt (i) auf eine Bodenfläche, welche bereits mit einer älteren Beschichtung, insbesondere einer Epoxidharz-Beschichtung, beschichtet ist. Dabei wird insbesondere eine abgenutzte oder schadhafte Beschichtung mittels des erfindungsgemässen Bodenschutzsystems neu beschichtet bzw. repariert. Vor der Durchführung von Schritt (i) wurde die Oberfläche bevorzugt gereinigt und von Staub befreit. Gegebenenfalls wurde die alte Beschichtung zumindest teilweise abgeschliffen.

Die Epoxidharz-Beschichtung, welche in Schritt (i) appliziert wird, umfasst bevorzugt eine Harz-Komponente und eine Härter-Komponente, welche jeweils getrennt voneinander lagerstabil sind und vor oder während der Applikation in Schritt (i) miteinander vermischt werden.

Bevorzugt enthält die Harz-Komponente mindestens ein Epoxid-Flüssigharz.

Bevorzugt als Epoxid-Flüssigharz sind bei Raumtemperatur flüssige, aromatische Polyepoxide mit einem mittleren Epoxid-Equivalentgewicht von 156 bis 210 g/eq.

Besonders bevorzugt ist ein Bisphenol A-Diglycidylether, ein Bisphenol F-Diglycidylether und/oder ein Bisphenol A/F-Diglycidylether, wie sie kommerziell beispielsweise von Huntsman, Dow oder Hexion erhältlich sind.

Weiterhin besonders bevorzugt ist ein Bisphenol A-Diglycidylether aus der Umsetzung von Bisphenol A mit biobasiertem Epichlorhydrin. Dies ermöglicht besonders nachhaltige Epoxidharz-Beschichtungen.

Weiterhin besonders bevorzugt sind Phenol-Formaldehyd Novolak-Glycidylether, insbesondere mit einer mittleren Funktionalität von 2.3 bis 3.

Weiterhin besonders bevorzugt sind Diglycidylether von Vanillinalkohol. Solche Epoxidharz-Beschichtungen sind besonders nachhaltig.

Bevorzugt umfasst die Harz-Komponente mindestens einen Epoxidgruppen-haltigen Reaktivverdünner.

Geeignete Epoxidgruppen-haltige Reaktivverdünner sind insbesondere Butandioldiglycidylether, Hexandioldiglycidylether, Trimethylolpropantriglycidylether, Phenylglycidylether, Kresylglycidylether, Guaiacolglycidylether, 4-Methoxyphenylglycidylether, p-n-Butylphenylglycidylether, p-tert.Butylphenylglycidylether, 4-Nonylphenylglycidylether, 4-Dodecylphenylglycidylether, Vanillinglycidylether, Cardanolglycidylether, Benzylglycidylether, Allylglycidylether, Butylglycidylether, Hexylglycidylether, 2-Ethylhexylglycidylether oder Glycidylether von natürlichen Alkoholen wie insbesondere C₈₋₁₀- oder C₁₂₋₁₄- oder C₁₃₋₁₅-Alkylglycidylether.

Bevorzugt sind Glycidylether von natürlichen Alkoholen, insbesondere ein C₁₂₋₁₄-Alkylglycidylether. Solche Epoxidharz-Beschichtungen sind besonders gut verarbeitbar.

Bevorzugt umfasst die Harz-Komponente einen Gehalt an Epoxidgruppen-haltigen Reaktivverdünnern von 5 bis 30 Gewichtsteilen, insbesondere 10 bis 25 Gewichtsteilen, bezogen auf 100 Gewichtsteile Epoxid-Flüssigharz.

Gegebenenfalls enthält die Harz-Komponente zusätzlich Anteile von Epoxid-Festharz.

Bevorzugt enthält die Härter-Komponente der Epoxidharz-Beschichtung mindestens ein Polyamin mit mindestens drei Aminwasserstoffen.

Geeignet sind insbesondere aliphatische, cycloaliphatische oder arylaliphatische Polyamine, insbesondere ausgewählt aus der Gruppe bestehend aus 2,2(4),4-Trimethylhexamethylendiamin (TMD), 1,2-Diaminocyclohexan, Isophorondiamin (IPDA), 1,3-Bis(aminomethyl)cyclohexan, 1,4-Bis(aminomethyl)cyclohexan, 2(4)-Methyl-1,3-diaminocyclohexan, 2,5(2,6)-Bis(aminomethyl)bicyclo[2.2.1]heptan (NBDA), Bis(4-aminocyclohexyl)methan, 1,3-Bis(aminomethyl)benzol (MXDA), N-Benzyl-1,2-ethandiamin, N-Furfuryl-1,2-ethandiamin, N-Tetrahydrofurfuryl-1,2-ethandiamin, Phenalkaminen, Polyoxypropylendiaminen mit mittlerem Molekulargewicht Mₙ von 200 bis 500 g/mol, Polyoxypropylentriaminen mit mittlerem Molekulargewicht Mₙ von 300 bis 500 g/mol, Triethylentetramin (TETA), Tetraethylenpentamin (TEPA), Pentaethylenhexamin (PEHA), N,N'-Bis(3-aminopropyl)ethylendiamin (N4-Amin) und Reaktionsprodukten aus der reduktiven Alkylierung von N4-Amin, DETA und TETA mit Benzaldehyd und Wasserstoff.

Davon bevorzugt sind IPDA, 1,3-Bis(aminomethyl)cyclohexan, MXDA, N-Benzyl-1,2-ethandiamin, Phenalkamine, Polyoxypropylendiamine mit mittlerem Molekulargewicht Mₙ von 200 bis 300 g/mol, Reaktionsprodukte aus der reduktiven Alkylierung von N4-Amin, DETA oder TETA mit Benzaldehyd und Wasserstoff, sowie Mischungen aus zwei oder mehr dieser Polyamine.

Besonders bevorzugt ist IPDA. IPDA ermöglicht eine hohe Glasumwandlungstemperatur der ausgehärteten Beschichtung und wenig Neigung zum Vergilben. Besonders bevorzugt ist weiterhin 1,3-Bis(aminomethyl)cyclohexan. 1,3-Bis(aminomethyl)cyclohexan ermöglicht eine besonders schnelle Aushärtung und besonders wenig Neigung zum Vergilben der ausgehärteten Beschichtung.

Besonders bevorzugt ist weiterhin MXDA. MXDA ermöglicht eine besonders schnelle Aushärtung.

Besonders bevorzugt ist weiterhin N-Benzyl-1,2-ethandiamin. N-Benzyl-1,2-ethan-diamin ermöglicht eine besonders gute Verarbeitbarkeit mit gutem Verlauf bei schneller Aushärtung und wenig Neigung zu Oberflächenstörungen durch Blushing bei der Aushärtung.

Die Epoxidharz-Beschichtung kann weitere Bestandteile enthalten, insbesondere
- Beschleuniger wie insbesondere 2,4,6-Tris(dimethylaminomethyl)phenol, Salicylsäure, Calciumnitrat oder Phenol-Novolak-Harze,
- weitere Amine, insbesondere Addukte der erwähnten Polyamine mit Mono- oder Diepoxiden, N,N'-Dibenzyl-1,2-ethandiamin, Phenalkamide oder aromatische Polyamine,
- Verdünner, insbesondere Verdünner mit einem Siedepunkt bei Normaldruck von mindestens 200 °C, insbesondere Benzylalkohol, 2-Phenoxyethanol, Cardanol, styrolisiertes Phenol, Diisopropylnaphthalin oder Isopropylbiphenyle,
- Füllstoffe wie insbesondere biobasierte Granulate, gemahlenes oder gefälltes Calciumcarbonat, welches gegebenenfalls mit Fettsäure, insbesondere Stearaten, beschichtet ist, Baryt (Schwerspat), Talk, Quarzmehl, Quarzsand, Siliciumcarbid, Eisenglimmer, Dolomit, Wollastonit, Kaolin, Mica (Kalium-Aluminium-Silikat), Titandioxid, Eisenoxide, Molekularsieb, Aluminiumoxid, Aluminiumhydroxid, Magnesiumhydroxid, Kieselsäure, oder Hohlkugeln,
- Nanofüllstoffe, insbesondere Carbon Nanotubes;
- Farbstoffe oder Pigmente,
- Lösemittel;
- Rheologie-Modifizierer, insbesondere Verdicker oder Antiabsetzmittel,
- Haftverbesserer, insbesondere Organoalkoxysilane,
- flammhemmende Substanzen, insbesondere die bereits genannten Füllstoffe Aluminiumhydroxid oder Magnesiumhydroxid, oder Phosphate wie insbesondere Diphenylkresylphosphat,
- Additive wie insbesondere Netzmittel, Verlaufmittel, Entschäumer, Entlüfter, Stabilisatoren gegen Oxidation, Wärme, Licht oder UV-Strahlung, oder Biozide.

Solche weitere Bestandteile der Epoxidharz-Beschichtung können als Bestandteil der Harz- und/oder der Härter-Komponente vorhanden sein, wobei Beschleuniger und weitere Amine bevorzugt als Bestandteil der Härter-Komponente vorliegen.

Bevorzugt enthält die Epoxidharz-Beschichtung mindestens einen Beschleuniger, insbesondere 2,4,6-Tris(dimethylaminomethyl)phenol.

Bevorzugt enthält die Epoxidharz-Beschichtung mindestens einen Füllstoff, insbesondere ausgewählt aus biobasierten Granulaten, Calciumcarbonaten, Baryt, Talk und Quarzmehl, sowie mindestens ein Pigment, insbesondere ein Titandioxid. Bevorzugt enthält die Epoxidharz-Beschichtung mindestens einen Verdünner. Bevorzugt enthält die Epoxidharz-Beschichtung mindestens ein Additiv, insbesondere ausgewählt aus Netzmitteln, Verlaufmitteln, Entschäumern und Entlüftern.

In einer bevorzugten Ausführungsform der Erfindung enthält die Epoxidharz-Beschichtung mindestens ein biobasiertes Granulat **G2** mit einem Ligningehalt von mindestens 15 Gewichts-% und einer Partikelgrösse ≤ 0.2 mm, bevorzugt ≤ 0.1 mm, insbesondere ein Olivenkernmehl, insbesondere als Bestandteil der Harz- und/oder der Härter-Komponente. Eine solche Epoxidharz-Beschichtung ist besonders nachhaltig.

Vor oder während der Applikation in Schritt (i) werden die Komponenten der Epoxidharz-Beschichtung miteinander vermischt. Insbesondere werden die Harz- und die Härter-Komponente miteinander vermischt.

Das Mischungsverhältnis der Komponenten wird bevorzugt so gewählt, dass das Verhältnis der Anzahl gegenüber Epoxidgruppen reaktiven Gruppen, insbesondere der Aminwasserstoffe, zur Anzahl Epoxidgruppen im Bereich von 0.5 bis 1.5, bevorzugt 0.7 bis 1.2, liegt. In Gewichtsteilen liegt das Mischungsverhältnis zwischen der Harz- und der Härter-Komponente typischerweise im Bereich von etwa 1:1 bis 10:1.

Das Vermischen der Komponenten kann kontinuierlich oder batchweise erfolgen, insbesondere bei Umgebungstemperatur.

Mit dem Vermischen der Komponenten beginnt die Aushärtung der Epoxidharz-Beschichtung durch chemische Reaktion. Dabei reagieren Aminwasserstoffe mit Epoxidgruppen unter deren Ringöffnung (Additionsreaktion). Als Ergebnis hauptsächlich dieser Reaktion polymerisiert die Beschichtung und härtet dadurch aus.

Die Applikation der Epoxidharz-Beschichtung in Schritt (i) und das Abstreuen mit dem biobasierten Granulat **G1** in Schritt (ii) erfolgen insbesondere innerhalb der Zeitspanne ab dem Mischen der Harz- und der Härter-Komponente, in welcher die Epoxidharz-Beschichtung noch nicht geliert und ausreichend fliessfähig für die Schritte (i) und (ii) ist.

Die Applikation der Epoxidharz-Beschichtung in Schritt (i) erfolgt im flüssigen Zustand. Bevorzugt wird die flüssige Epoxidharz-Beschichtung als selbstverlaufende oder leicht thixotropierte Beschichtung auf eine ebene oder leicht geneigte Fläche appliziert, insbesondere durch Aufgiessen auf die Bodenfläche und anschliessendem gleichmässigem Verteilen mit beispielsweise einem Pinsel, einer Rolle, einer Walze, einer Rakel oder einer Zahntraufel. Die Applikation kann auch als Spritzapplikation erfolgen. Zum Ausgleichen von Unebenheiten, zum Füllen von Löchern oder Spalten im Substrat oder zum Hochziehen im Randbereich kann die Applikation auch mittels einem Spachtel erfolgen.

Bevorzugt wird die Epoxidharz-Beschichtung in Schritt (i) in einer Menge von 0.2 bis 3 kg/m², bevorzugt 0.3 bis 2 kg/m², appliziert.

Bevorzugt wird die Epoxidharz-Beschichtung in Schritt (i) in einer Schichtdicke von 0.1 bis 3 mm, bevorzugt 0.3 bis 2 mm, appliziert.

Falls die Epoxidharz-Beschichtung in Schritt (i) eine zu dünnflüssige Konsistenz aufweist, beispielsweise weil die Umgebungstemperatur bei der Applikation hoch ist oder weil die zu beschichtende Bodenfläche geneigt oder sehr uneben ist und Löcher oder Spalten gefüllt werden sollen, kann die Epoxidharz-Beschichtung vor der Applikation in Schritt (i) mit einem zusätzlichen Füllstoff verfüllt werden. Dazu geeignet ist beispielsweise Quarzmehl oder insbesondere ein biobasiertes Granulat **G3** mit einem Ligningehalt von mindestens 15 Gewichts-%, einer Partikelgrössenverteilung von 0.1 bis 1 mm und einem volumenbasierten d⁵⁰-Wert von 0.2 bis 0.8 mm, bevorzugt mit einer Partikelgrössenverteilung von 0.1 bis 0.5 mm und einem volumenbasierten d⁵⁰-Wert von 0.2 bis 0.4 mm. Das Beimischen eines solchen biobasierten Granulats **G3,** insbesondere eines Olivenkernmehls, während oder kurz nach dem Vermischen der Harz- und der Härter-Komponente bewirkt eine Verdickung der flüssigen Epoxidharz-Beschichtung, wobei diese immer noch fliessfähig bis leicht thixotrop ist. Bevorzugt wird ein biobasiertes Granulat **G3** in einer Menge von 10 bis 40 Gewichtsteilen, bevorzugt 15 bis 30 Gewichtsteilen, bezogen auf 100 Gewichtsteile Harz- plus Härter-Komponente vor Schritt (i) eingemischt.

Anschliessend an Schritt (i) erfolgt Schritt (ii), wobei die frisch applizierte, noch flüssige Epoxidharz-Beschichtung mit dem biobasierten Granulat **G1** abgestreut wird.

Bevorzugt weist die noch flüssige Epoxidharz-Beschichtung beim Abstreuen mit dem biobasierten Granulat **G1** in Schritt (ii) eine Viskosität bei 20 °C von 0.5 bis 50 Pa s, bevorzugt 0.5 bis 25 Pa s, auf, gemessen mittels Platte-Platte Viskosimeter mit Plattendurchmesser 50 mm, Platte-Platte-Abstand 0.5 mm und Scherrate 100 s⁻¹.

Das biobasierte Granulat **G1** weist bevorzugt einen Ligningehalt von mindestens 15 Gewichts-%, insbesondere mindestens 20 Gewichts-%, auf. Ein solches Granulat **G1** ermöglicht Bodenschutzsysteme mit einer besonders hohen Robustheit gegenüber mechanischer Beanspruchung, insbesondere einer besonders hohen Abrasionsfestigkeit.

Das biobasierte Granulat **G1** ist bevorzugt ein Abfallprodukt von landwirtschaftlichen Erzeugnissen, insbesondere Nahrungsmitteln wie insbesondere Ölen, Nüssen oder Samen, wobei nicht essbare Anteile in Form von Schalen, Hülsen oder Kernen aus verholztem Material anfallen. Diese werden bevorzugt für die erfindungsgemässe Verwendung aufbereitet und auf die gewünschte Partikelgrössenverteilung gemahlen und gegebenenfalls weiter behandelt, insbesondere getrocknet oder gesiebt.

Das biobasierte Granulat **G1** ist insbesondere ausgewählt ist aus der Gruppe bestehend aus gemahlenen Olivenkernschalen, Kokosnussschalen, Mandelschalen, Walnussschalen, Pecannussschalen, Paranussschalen, Haselnussschalen, Macadamianussschalen, Cashewnussschalen, Pistazienschalen, Kakaofruchtschalen, Aprikosenkernschalen, Pfirsichkernschalen und Zwetschgenkernschalen.

Am meisten bevorzugt ist das biobasierte Granulat **G1** ein Granulat aus Olivenkernschalen. Ein solches Granulat wird auch als Olivenkernmehl bezeichnet. Es ist in hoher Menge und guter Qualität verfügbar und ermöglicht Bodenschutzsysteme mit besonders ebenmässig strukturierter Oberfläche, guter Überstreichbarkeit, ausgezeichneter Haftung zwischen den Schichten und einer überraschend hohen Abrasionsfestigkeit.

Das biobasierte Granulat **G1** weist eine Partikelgrössenverteilung von 0.2 bis 2 mm und einen volumenbasierten d⁵⁰-Wert von 0.3 bis 1.3 mm auf. Ein solches Granulat ermöglicht ein Bodenschutzsystem mit einer strukturierten Oberfläche und gewährleistet dadurch eine gewisse Rutschhemmung. Dabei lässt sich ein zu feines Granulat beim Abstreuen nur schlecht werfen und die erhaltene Oberfläche ist kaum strukturiert und zu wenig rutschhemmend, während ein zu grobes Granulat schlecht überstreichbar und anfällig ist auf Ausbrüche bei mechanischer Beanspruchung.

Bevorzugt weist das biobasierte Granulat **G1** eine Partikelgrössenverteilung von 0.2 bis 1.5 mm und einen volumenbasierten d⁵⁰-Wert von 0.4 bis 1.1 mm, insbesondere eine Partikelgrössenverteilung von 0.2 bis 1 mm und einen volumenbasierten d⁵⁰-Wert von 0.4 bis 0.8 mm, auf. Ein solches Granulat ermöglicht Bodenschutzsysteme mit besonders ebenmässiger, gut strukturierter Oberfläche bei besonders guter Überstreichbarkeit.

Bevorzugt weist das biobasierte Granulat **G1** einen Feuchtigkeitsgehalt von weniger als 15 Gewichts-% auf.

Das Abstreuen in Schritt (ii) erfolgt bevorzugt manuell, insbesondere durch Werfen des Granulats **G1** über die applizierte Epoxidharz-Beschichtung. Dabei wird insbesondere darauf geachtet, eine möglichst gleichmässige Menge Granulat auf die noch flüssige Beschichtung rieseln zu lassen.

Bei grossen Flächen kann es notwendig sein, die applizierte Beschichtung für das Abstreuen zu betreten. Dabei tragen die Arbeiter bevorzugt Spikes an den Schuhsohlen, um die noch flüssige Beschichtung nicht zu beschädigen.

Bevorzugt wird das biobasierte Granulat **G1** in Schritt (ii) in einer Menge von 0.3 bis 2 kg/m², bevorzugt 0.5 bis 1.5 kg/m², eingesetzt.

Das Granulat wird bevorzugt im Überschuss auf die Epoxidharz-Beschichtung gestreut. Das heisst, es wird bevorzugt soviel Granulat gestreut, dass das Granulat nicht vollständig in die noch flüssige Beschichtung einsinkt, sondern zusätzliches, überschüssiges Granulat auf der Oberfläche verbleibt, welches nicht in die Beschichtung einsinkt.

Die Menge an eingesetztem Granulat wird insbesondere an die Schichtdicke der in Schritt (i) applizierten Beschichtung angepasst, wobei bei einer geringeren Schichtdicke eine geringere Menge Granulat **G1** für einen sinnvollen Überschuss benötigt wird als bei einer höheren Schichtdicke.

Nach dem Abstreuen in Schritt (ii) folgt Schritt (iii).

In Schritt (iii) erfolgt die Aushärtung der abgestreuten Beschichtung bei Umgebungsbedingungen, insbesondere bei einer Temperatur von 0 bis 40 °C, bevorzugt 5 bis 35 °C. Die für die Aushärtung benötigte Zeit ist abhängig von der Umgebungstemperatur und den in der Epoxidharz-Beschichtung vorhandenen Inhaltsstoffen.

Typischerweise ist die Beschichtung nach einer Wartezeit von etwa 4 bis 24 Stunden soweit ausgehärtet, dass die Beschichtung ohne Beschädigung weiter bearbeitet werden kann, insbesondere indem Schritt (iv) durchgeführt wird. Bei sehr kalten Umgebungsbedingungen kann auch eine längere Wartezeit notwendig sein, zum Beispiel 48 Stunden. Es ist auch möglich, eine längere Wartezeit verstreichen zu lassen, zum Beispiel über ein Wochenende.

In Schritt (iv) erfolgt gegebenenfalls das mechanische Entfernen von nicht in die Beschichtung eingebundenem biobasiertem Granulat **G1.** Bevorzugt wird Schritt (iv) durchgeführt. Dabei wird nicht eingebundenes Granulat bevorzugt mittels Besen, Bürste und/oder Staubsauger von der Oberfläche entfernt. Somit weist das Bodenschutzsystem nach Schritt (iv) eine körnige Oberfläche mit in und an der ausgehärteten Epoxidharz-Beschichtung haftendem, teilweise vorstehendem biobasiertem Granulat **G1** auf.

Bevorzugt umfasst die erfindungsgemässe Methode einen weiteren Schritt (v), wobei das Bodenschutzsystem mit dem eingebundenen Granulat **G1** mit einer Epoxidharz-Versiegelung überbeschichtet wird, insbesondere in einer Menge von 0.3 bis 1.3 kg/m², bevorzugt 0.5 bis 1.1 kg/m².

Als Epoxidharz-Versiegelung kann dasselbe Material wie in Schritt (i) eingesetzt werden. Die Epoxidharz-Versiegelung kann aber auch eine andere Zusammensetzung aufweisen, wobei die bereits für die Epoxidharz-Beschichtung aus Schritt (i) erwähnten Inhaltsstoffe geeignet und bevorzugt sind.

Insbesondere umfasst die Epoxidharz-Versiegelung eine Harz-Komponente und eine Härter-Komponente, welche separat gelagert werden und vor oder während der Applikation miteinander vermischt werden. Dabei umfasst die Harz-Komponente bevorzugt mindestens ein Epoxid-Flüssigharz, und die Härter-Komponente umfasst bevorzugt mindestens ein Polyamin mit mindestens drei Aminwasserstoffen.

Die Applikation der Epoxidharz-Versiegelung erfolgt bevorzugt mittels Rakel, Rolle, Walze oder Pinsel. Besonders bevorzugt erfolgt die Applikation mittels einer Rolle. Das Granulat **G1** auf der Oberfläche des Bodenschutzsystems ist mit handelsüblichen Epoxidharz-Versiegelungen gut benetzbar und kann insbesondere in einem Arbeitsgang überbeschichtet werden, ohne dass dabei Löcher oder Poren in der Versiegelung entstehen, und insbesondere ohne dass ein übermässiger Verbrauch an Versiegelung benötigt wird.

Nach der Aushärtung der Versiegelung, insbesondere bei Umgebungsbedingungen, wird eine ebenmässige, gleichmässig strukturierte Oberfläche mit guter Rutschhemmung und hoher Robustheit erhalten, insbesondere gegenüber mechanischer Beanspruchung und der Einwirkung von Nässe, Tausalz, Reinigungsmitteln und weiteren Flüssigkeiten.

Bei Verwendung eines zu feinen Granulats **G1** besteht der Nachteil, dass die Versiegelung die geringe Körnung soweit ausgleicht, dass keine sinnvolle Rutschhemmung mehr besteht.

Bei Verwendung eines zu groben Granulats **G1** besteht der Nachteil, dass beim Überstreichen von groben Körnern Poren und Löcher in der Versiegelung entstehen können, die mit zusätzlichem Aufwand und entsprechend höherem Verbrauch mit Versiegelung aufgefüllt werden müssen.

Ein weiterer Gegenstand der Erfindung ist ein Bodenschutzsystem, erhalten aus der Methode wie vorgängig beschrieben.

Insbesondere umfasst das Bodenschutzsystem
- mindestens eine Epoxidharz-Beschichtung wie vorgängig beschrieben,
- mindestens ein biobasiertes Granulat **G1** wie vorgängig beschrieben, und
- mindestens eine Epoxidharz-Versiegelung als oberste Schicht,
wobei die Epoxidharz-Beschichtung mit dem biobasierten Granulat **G1** abgestreut ist und das biobasierte Granulat **G1** zumindest teilweise aus der Epoxidharz-Beschichtung vorsteht und mit der Epoxidharz-Versiegelung überdeckt ist.

Das versiegelte Bodenschutzsystem verfügt über eine robuste, rutschhemmende Oberfläche. Es schützt den Boden vor mechanischer Beanspruchung und der Einwirkungen von Nässe, Tausalz, Reinigungsmitteln und weiteren Flüssigkeiten. Das biobasierte Granulat **G1** verfügt über eine gute Haftung im Bodenschutzsystem und gewährleistet eine hohe Abrasionsfestigkeit. Überraschenderweise ist die Abrasionsfestigkeit auf dem gleichen hohen Niveau wie für ein entsprechendes Bodenschutzsystem, welches mit Quarzsand anstelle des biobasierten Granulats **G1** abgestreut ist. Dies ist besonders überraschend, würde man doch erwarten, dass ein biobasiertes Granulat mit seiner im Vergleich zu Quarzsand geringeren Härte eine deutlich reduzierte Robustheit gegenüber mechanischen Abriebkräften zur Folge hätte.

Ein weiterer Gegenstand der Erfindung ist die Verwendung des erfindungsgemässen Bodenschutzsystems auf Brücken, Rampen, Treppen, Terrassen, Balkonen oder Parkdecks, oder in Garagen, Parkhäusern, Industriehallen oder Lagerhallen.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Sigma-Aldrich Chemie GmbH.

Die volumenbasierten d⁵⁰-Werte wurden bestimmt mittels Siebanalyse nach DIN 66165 (2016).

### verwendete Granulate:

| | |
|---|---|
| Olivenkernmehl ≤ 0.1 mm | Olivenkernschalen aus der Gewinnung von Oliven-öl, getrocknet, gemahlen, Partikelgrösse ≤ 0.1 mm (von Micronizados Vegetales S.L) |
| Olivenkernmehl 0.1-0.3 mm | Olivenkernschalen aus der Gewinnung von Oliven-öl, getrocknet, gemahlen, Ligningehalt > 20 Gew.-%, Partikelgrösse 0.1 bis 0.3 mm, d⁵⁰ (Volumen) 0.2 mm (von Micronizados Vegetales S.L) |
| Olivenkernmehl 0.3-0.6 mm | Olivenkernschalen aus der Gewinnung von Oliven-öl, getrocknet, gemahlen, Ligningehalt > 20 Gew.-%, Partikelgrösse 0.3 bis 0.6 mm, d⁵⁰ (Volumen) 0.4 mm (von Micronizados Vegetales S.L) |
| Olivenkernmehl 0.3-0.8 mm | Olivenkernschalen aus der Gewinnung von Oliven-öl, getrocknet, gemahlen, Ligningehalt > 20 Gew.-%, Partikelgrösse 0.3 bis 0.8 mm, d⁵⁰ (Volumen) 0.5 mm (von Micronizados Vegetales S.L) |
| Olivenkernmehl 0.3-1.5 mm | Olivenkernschalen aus der Gewinnung von Oliven-öl, getrocknet, gemahlen, Ligningehalt > 20 Gew.-%, Partikelgrösse 0.3 bis 1.5 mm, d⁵⁰ (Volumen) 1.0 mm (von Micronizados Vegetales S.L) |

| | |
|---|---|
| Olivenkernmehl 0.3-2.0 mm | Olivenkernschalen aus der Gewinnung von Oliven-öl, getrocknet, gemahlen, Ligningehalt > 20 Gew.-%, Partikelgrösse 0.3 bis 2 mm, d⁵⁰ (Volumen) 1.1 mm (von Micronizados Vegetales S.L) |
| Mandelmehl 0.3-0.8 mm | getrocknete, gemahlene Mandelschalen, Ligningehalt > 20 Gew.-%, Partikelgrösse 0.3 bis 0.8 mm, d⁵⁰ (Volumen) 0.5 mm (von Micronizados Vegetales S.L) |
| Quarzsand 0.3-0.8 mm | Quarzsand mit Partikelgrösse 0.3 bis 0.8 mm |

### verwendete Epoxidharz-Beschichtungen:

### Beschichtung E1:

Harz-Komponente enthaltend Bisphenol A- und A/F-Diglycidylether, Monoalkoholglycidylether, Diisopropylnaphthalin, Additive und ca. 20 Gew.% Olivenkernmehl ≤ 0.1 mm bezogen auf das Gesamtgewicht der Harz-Komponente. Härter-Komponente enthaltend Isophorondiamin, 1,3-Bis(aminomethyl)benzol, N-Benzyl-1,2-ethandiamin, 2,4,6-Tris(dimethylaminomethyl)phenol und Benzylalkohol.

Zur Anwendung wurden die Harz- und die Härter-Komponente im Gewichtsverhältnis 76/24 vermischt.

### Sikafloor^{®}-150: ungefüllte zweikomponentige Epoxidharz-Beschichtung (von Sika)

### Applikation von Bodenschutzsvstemen:

### Beispiele 1 bis 6:

Für die Beispiele 1 bis 6 wurden Betonplatten (500 x 500 mm) mit 0.5 kg/m² Beschichtung **E1** mittels einer Gummirakel beschichtet. Die frisch applizierte, noch flüssige Beschichtung wurde mit verschiedenen biobasierten Granulaten gemäss Tabelle 1 in einer Menge von 1 kg/m² abgestreut und das überschüssige, nicht eingebundene Granulat nach einer Aushärtezeit von 24 h bei 20 °C mittels Bürste und Staubsauger entfernt. Anschliessend wurde die Oberfläche mit Sikafloor^{®} 2640 (von Sika), appliziert mittels einer Nylonrolle, überstrichen bzw. versiegelt. Die Resultate sind in Tabelle 1 angegeben.

Das mit **"(Ref.)"** bezeichnete Beispiel 1 ist ein Vergleichsbeispiel.

**Tabelle 1**

| **Beispiel** | **1 (Ref.)** | **2** | **3** | **4** | **5** | **6** |
|---|---|---|---|---|---|---|
| Olivenkernmehl [mm] | 0.1-0.3 | 0.3-0.6 | 0.3-0.8 | 0.3-1.5 | 0.3-2.0 | - |
| | d⁵⁰ 0.2 | d⁵⁰ 0.4 | d⁵⁰ 0.5 | d⁵⁰ 1.0 | d⁵⁰ 1.1 | |
| Mandelmehl [mm] | - | - | - | - | - | 0.3-0.8 |
| | | | | | | d⁵⁰ 0.5 |
| Überstreichbarkeit | sehr gut | sehr gut | sehr gut | gut | ok | gut |
| Aspekt | fast keine Struktur | feine Struktur, einige Poren | ebenmässige Struktur mit guter Körnung | ebenmässige Struktur mit grober Körnung | ebenmässige Struktur mit sehr grober Körnung | ebenmässige Struktur mit guter Körnung |

Aus der Tabelle 1 ist Folgendes ersichtlich:
Das Beispiel 1 (Vergleichsbeispiel) zeigte nach der Versiegelung eine ungenügende Struktur bzw. Körnung, um als rutschhemmende Oberfläche zu dienen. Das zum Abstreuen verwendete Olivenkernmehl war zu fein.

Die Beispiele 2 bis 5 ergaben nach der Versiegelung eine gut rutschhemmende Oberfläche, wobei die Struktur des Beispiels 3 optimal war.

Das Beispiel 6 mit Mandelmehl ergab eine gute rutschhemmende Oberfläche. Der Verbrauch beim Überstreichen war aber höher als beim Beispiel 3.

### Beispiele 7 bis 9:

Für die Beispiele 7 bis 9 wurde in einer Industriehalle jeweils auf einer Fläche von 5 m² eines Estrichmörtel-Bodens ein Bodenschutzsystem appliziert mit dem in Tabelle 2 beschriebenen Aufbau. Die Umgebungsbedingungen bei der Verarbeitung waren 19 °C und 60% relative Feuchtigkeit. Das Entfernen des nicht eingebundenen Olivenkernmehls oder Quarzsands erfolgte nach einer Aushärtezeit von 24 h bei 19 °C und 60% relativer Feuchtigkeit mittels Besen und Staubsauger. Anschliessend erfolgte die Applikation der Versiegelung.

Für die Prüfung auf Haftzug wurde jeweils zusätzlich eine Betonplatte (500 x 500 mm) mit dem gleichen Aufbau beschichtet. Nach einer Aushärtezeit von 14 Tagen bei ca. 19 °C und 60% relativer Feuchtigkeit wurde die Prüfung auf **Haftzug** wie folgt durchgeführt. Mit einem Diamantkernbohrer mit Durchmesser 50 mm wurde durch das Bodenschutzsystem ca. 10 mm tief ins Betonsubstrat gebohrt. Auf die Fläche innerhalb der Bohrung wurde ein Stahlzylinder mit Durchmesser 50 mm auf das Bodenschutzsystem geklebt. Anschliessend wurde der Stahlzylinder in Anlehnung an DIN EN 4624 mit einer Geschwindigkeit von 0.05 N/mm²·s bis zum Bruch senkrecht zur Oberfläche des Bodenschutzsystems gezogen und anschliessend das Bruchbild beurteilt. Ein Kohäsivbruch im Betonsubstrat zeigte, dass das Bodenschutzsystem über eine ausgezeichnete Haftung zwischen den einzelnen Schichten und auf dem Betonsubstrat verfügte. Insbesondere zeigte ein Kohäsivbruch im Betonsubstrat, dass das zum Abstreuen verwendete Granulat im Bodenschutzsystem ausgezeichnet haftete.

Die Resultate sind Tabelle 2 angegeben.

Das mit "**(Ref.)**" bezeichnete Beispiel 9 ist ein Vergleichsbeispiel.

**Tabelle 2:**

| | **Beispiel 7** | **Beispiel 8** | **Beispiel 9 (Ref.)** |
|---|---|---|---|
| Aufbau | 0.66 kg/m² Beschichtung **E1** zusätzlich verfüllt mit 20 Gewichtsteilen Olivenkernmehl 0.1-0.3 mm bezogen auf 100 Gewichtsteile Beschichtung **E1** | | |
| | im Überschuss abgestreut mit 1 kg/m² Olivenkernmehl 0.3-0.8 mm gefolgt von Entfernen von ca. 0.3 kg/m² nicht eingebundenem Olivenkernmehl nach der Aushärtung | | im Überschuss abgestreut mit Quarzsand 0.3-0.8 mm gefolgt von Entfernen von nicht eingebundenem Quarzsand nach der Aushärtung |
| | 0.72 kg/m² Versiegelung Sikaflooh^{®} 378 (von Sika) | 0.69 kg/m² Versiegelung Sikaflooh^{®} 2640 (von Sika) | 0.70 kg/m² Versiegelung Sikaflooh^{®} 378 (von Sika) |
| Verarbeitbarkeit | Sehr gute Verarbeitbarkeit aller Schichten, das Olivenkernmehl 0.3-0.8 mm liess sich ohne Wellen- oder Streifenbildung in einem Arbeitsgang auf die Beschichtung streuen. | | Beim Abstreuen entstanden Zonen mit zu starkem Einsinken (Glatzenbildung), wo weiterer Sand nachgestreut werden musste. |
| Aspekt | sehr ebenmässig strukturierte Oberfläche ohne Poren | | ungleichmässig strukturierte Oberfläche mit sichtbaren Streifen und einigen Poren |
| Haftzug | Kohäsivbruch im Betonsubstrat | | |

### Beispiele 10 bis 13:

Für die Beispiele 10 bis 13 wurden Betonplatten (500 x 500 mm) mit 0.5 kg/m² entweder mit der Beschichtung **E1** oder mit Sikafloor^{®}-150 mittels einer Gummirakel beschichtet. Die frisch applizierte, noch flüssige Beschichtung wurde jeweils mit 1 kg/m² Olivenkernmehl 0.3-0.8 mm abgestreut und das überschüssige, nicht eingebundene Olivenkernmehl nach einer Aushärtezeit von 24 h bei 20 °C mittels Bürste und Staubsauger entfernt. Anschliessend wurde die in Tabelle 3 angegebene Versiegelung in der angegebenen Menge auf die abgestreute Fläche appliziert.

Von den erhaltenen beschichteten Betonplatten wurde der Aspekt beurteilt und nach 14 Tagen Lagerung im NK eine Haftzugprüfung wie für Beispiel 7 beschrieben durchgeführt.

Die Resultate sind in Tabelle 3 angegeben.

**Tabelle 3**

| | **Beispiel 10** | **Beispiel 11** | **Beispiel 12** | **Beispiel 13** |
|---|---|---|---|---|
| Aufbau | 0.5 kg/m² Beschichtung **E1** | | 0.5 kg/m² Sikafloor^{®}-150 | |
| | im Überschuss abgestreut mit 1 kg/m² Olivenkernmehl 0.3-0.8 mm gefolgt von Entfernen von ca. 0.3 kg/m² nicht eingebundenem Olivenkernmehl nach der Aushärtung | | | |
| | 0.6 kg/m² Versiegelung Sikafloor^{®} 378 (Sika) | 0.6 kg/m² Versiegelung Sikafloor^{®} 2640 (Sika) | 1 kg/m² Versiegelung Sikafloor^{®} 378 (Sika) | 1 kg/m² Versiegelung Sikafloor^{®} 2640 (Sika) |
| Aspekt | ebenmässige, gut strukturierte Oberfläche ohne Poren | | | |
| Haftzug | Kohäsivbruch im Betonsubstrat | | | |

Von **Beispiel 11** wurde zusätzlich die **Chemikalienbeständigkeit** geprüft.

Dazu wurden verschiedene Prüfmedien im Normklima auf die Oberfläche des Bodenschutzsystems aus Beispiel 11 getropft und nach einer Belastungszeit von 1 Tag und 3 Tagen das Bodenschutzsystem beurteilt. Unter anderem wurden Flüssigkeiten aus den Prüfgruppen 1, 5, 7 und 15 gemäss Deutschem Institut für Bautechnik verwendet. Für die Beurteilung des Bodenschutzsystems wurde die Veränderung der Shore D Härte nach DIN 53505 sowie der Aspekt gemäss folgender Skala bewertet:

| | | |
|---|---|---|
| A = | beständig | (Härteverlust weniger als 20 %, keine Blasen, kein Haftverlust, keine oder nur geringe Quellung) |
| B = | bedingt beständig | (20 bis 40 % Härteverlust, keine Blasen, kein Haftverlust, deutliche Quellung) |

| | | |
|---|---|---|
| C = | unbeständig | (mehr als 40 % Härteverlust, oder Blasen, oder Haftverlust, oder teilweise oder vollständige Zerstörung der Beschichtung) |
| D = | Zusatz | (Verfärbung, Ausbleichen oder Glanzverlust) |

Als Vergleich wurde ein entsprechendes Bodenschutzsystem abgestreut mit Quarzsand 0.3-0.8 mm anstelle von Olivenkernmehl auf die gleiche Weise geprüft. Die Resultate sind in Tabelle 4 angegeben.

**Tabelle 4**

| | | Bodenschutzsystem aus **Beispiel 11** (abgestreut mit Olivenkernmehl 0.3-0.8 mm) | entsprechendes Bodenschutzsystem abgestreut mit Quarzsand |
|---|---|---|---|
| Prüfgruppe 1 | Ottokraftstoffe | 1d: A | 1d: A |
| | | 3d: AD | 3d: AD |
| Prüfgruppe 5 | Alkohole | 1d: AD | 1d: AD |
| | | 3d: AD | 3d: AD |
| Prüfgruppe 7 | organische Ester | 1d: A | 1d: A |
| | | 3d: CD | 3d: CD |
| Prüfgruppe 15 | organische Ether | 1d: A | 1d: A |
| | | 3d: C | 3d: C |
| Milchsäure 30 Gew.% in H₂O | | 1d: AD | 1d: AD |
| | | 3d: CD | 3d: CD |
| Phosphorsäure 85 Gew.% in H₂O | | 1d: AD | 1d: AD |
| | | 3d: AD | 3d: AD |
| Schwefelsäure 60 Gew.% in H₂O | | 1d: AD | 1d: AD |
| | | 3d: AD | 3d: AD |
| Natronlauge 50 Gew.% in H₂O | | 1d: D | 1d: D |
| | | 3d: AD | 3d: AD |

Aus der Tabelle 4 ist ersichtlich, dass bei der Chemikalienbeständigkeit keine Unterschiede zwischen dem mit Olivenkernmehl und dem mit Quarzsand abgestreuten Bodeschutzsystem festgestellt wurden.

### Beispiel 14:

Eine Betonplatte (500 x 500 mm) wurde mittels einer Gummirakel mit 0.7 kg/m² Beschichtung **E1** beschichtet. Die frisch applizierte, noch flüssige Beschichtung wurde mit 1.5 kg/m² Olivenkernmehl 0.3-0.8 mm abgestreut und das überschüssige, nicht eingebundene Olivenkernmehl (ca. 0.4 kg/m²) nach einer Aushärtezeit von 3 Tagen bei ca. 20 °C mittels Bürste und Staubsauger entfernt. Anschliessend wurden 0.88 kg/m² der Beschichtung **E1** als Versiegelung mittels einer Nylonrolle auf die abgestreute Oberfläche appliziert und während 4 Wochen bei ca. 20 °C ausgehärtet.

Das so erhaltene Bodenschutzsystem wurde zur Bestimmung der Robustheit gegen **Abrasion** mechanisch belastet. Dazu wurde eine druckluftbetriebene Apparatur eingesetzt, bei welcher ein bereiftes Kraftfahrzeug-Rad mit einem Gewicht von 400 kg auf die beschichtete Betonplatte gedrückt und über einen Winkel von 100 ° um seine Achse bewegt wurde. Eine Drehung hin und wieder zurück in die Ausgangsposition wird als ein Zyklus bezeichnet. Bei der Beurteilung der Testergebnisse steht "1" für keine Beschädigung, "2" für einzelne abgefahrene Spitzen, "3" für eine Oberfläche, bei welcher die Versiegelung an wenigen Stellen weggebrochen ist, "4" für eine Oberfläche, bei welcher die Versiegelung auf bis zur Hälfte der Fläche weggebrochen ist, und "5" für eine Oberfläche, bei welcher die Versiegelung auf mehr als der Hälfte der Fläche weggebrochen ist.

Die Resultate sind in Tabelle 5 angegeben.

**Tabelle 5**

| | **Beispiel 14** |
|---|---|
| 5'000 Zyklen | 1 - 2 |
| 10'000 Zyklen | 1 - 2 |
| 15'000 Zyklen | 2 |

Aus der Tabelle 5 ist ersichtlich, dass das Bodenschutzsystem des Beispiels 14 eine sehr hohe Robustheit gegenüber Abrasion zeigte. Die gleichen Resultate werden auch mit einem entsprechenden Bodenschutzsystem erhalten, welches mit Quarzsand 0.3-0.8 mm anstelle von Olivenkernmehl abgestreut war.

## Patentansprüche

1. Methode zur Applikation eines Bodenschutzsystems, umfassend die Schritte
(i) Applizieren einer flüssigen Epoxidharz-Beschichtung auf eine Bodenfläche,
(ii) Abstreuen der frisch applizierten, noch flüssigen Epoxidharz-Beschichtung mit einem biobasierten Granulat **G1,**
(iii) Aushärten der abgestreuten Beschichtung bei Umgebungsbedingungen, insbesondere bei einer Temperatur von 0 bis 40 °C, bevorzugt 5 bis 35 °C,
(iv) gegebenenfalls gefolgt von mechanischem Entfernen von nicht in die Beschichtung eingebundenem biobasiertem Granulat **G1,**
wobei das biobasierte Granulat **G1** eine Partikelgrössenverteilung von 0.2 bis 2 mm und einen volumenbasierten d⁵⁰-Wert von 0.3 bis 1.3 mm aufweist, bestimmt mittels Siebanalyse nach DIN 66165 (2016).

2. Methode gemäss Anspruch 1, **dadurch gekennzeichnet, dass** die Epoxidharz-Beschichtung in Schritt (ii) eine Viskosität bei 20 °C von 0.5 bis 50 Pa s, bevorzugt 0.5 bis 25 Pa s, aufweist, gemessen mittels Platte-Platte Viskosimeter mit Plattendurchmesser 50 mm, Platte-Platte-Abstand 0.5 mm und Scherrate 100 s⁻¹.

3. Methode gemäss einem der Ansprüche 1 oder 2, **dadurch gekennzeichnet, dass** das biobasierte Granulat **G1** einen Ligningehalt von mindestens 15 Gewichts-%, bevorzugt mindestens 20 Gewichts-%, aufweist.

4. Methode gemäss einem der Ansprüche 1 bis 3, **dadurch gekennzeichnet, dass** das biobasierte Granulat **G1** ausgewählt ist aus der Gruppe bestehend aus gemahlenen Olivenkernschalen, Kokosnussschalen, Mandelschalen, Walnussschalen, Pecannussschalen, Paranussschalen, Haselnussschalen, Macadamianussschalen, Cashewnussschalen, Pistazienschalen, Kakaofruchtschalen, Aprikosenkernschalen, Pfirsichkernschalen und Zwetschgenkernschalen.

5. Methode gemäss einem der Ansprüche 1 bis 4, **dadurch gekennzeichnet, dass** das biobasierte Granulat **G1** ein Granulat aus Olivenkernschalen ist.

6. Methode gemäss einem der Ansprüche 1 bis 5, **dadurch gekennzeichnet, dass** das biobasierte Granulat **G1** eine Partikelgrössenverteilung von 0.2 bis 1.5 mm und einen volumenbasierten d⁵⁰-Wert von 0.4 bis 1.1 mm, bevorzugt eine Partikelgrössenverteilung von 0.2 bis 1 mm und einen volumenbasierten d⁵⁰-Wert von 0.4 bis 0.8 mm, aufweist.

7. Methode gemäss einem der Ansprüche 1 bis 6, **dadurch gekennzeichnet, dass** das biobasierte Granulat **G1** in Schritt (ii) in einer Menge von 0.3 bis 2 kg/m², bevorzugt 0.5 bis 1.5 kg/m², eingesetzt wird.

8. Methode gemäss einem der Ansprüche 1 bis 7, **dadurch gekennzeichnet, dass** die Epoxidharz-Beschichtung eine Harz-Komponente und eine Härter-Komponente umfasst, welche jeweils getrennt voneinander lagerstabil sind und vor oder während der Applikation in Schritt (i) miteinander vermischt werden.

9. Methode gemäss Anspruch 8, **dadurch gekennzeichnet, dass** die Harz-Komponente mindestens ein Epoxid-Flüssigharz enthält.

10. Methode gemäss einem der Ansprüche 8 oder 9, **dadurch gekennzeichnet, dass** die Härter-Komponente mindestens ein Polyamin mit mindestens drei Aminwasserstoffen enthält.

11. Methode gemäss einem der Ansprüche 1 bis 10, **dadurch gekennzeichnet, dass** die Epoxidharz-Beschichtung in Schritt (i) in einer Menge von 0.2 bis 3 kg/m², bevorzugt 0.3 bis 2 kg/m², appliziert wird.

12. Methode gemäss einem der Ansprüche 1 bis 11, **dadurch gekennzeichnet, dass** das Bodenschutzsystem mit dem eingebundenen Granulat **G1** in einem weiteren Schritt (v) mit einer Epoxidharz-Versiegelung überbeschichtet wird, insbesondere in einer Menge von 0.3 bis 1.3 kg/m², bevorzugt 0.5 bis 1.1 kg/m².

13. Bodenschutzsystem erhalten aus der Methode gemäss einem der Ansprüche 1 bis 12.

14. Bodenschutzsystem gemäss Anspruch 13, umfassend
- mindestens eine Epoxidharz-Beschichtung,
- mindestens ein biobasiertes Granulat **G1,** und
- mindestens eine Epoxidharz-Versiegelung als oberste Schicht,
wobei die Epoxidharz-Beschichtung mit dem biobasierten Granulat **G1** abgestreut ist und das biobasierte Granulat **G1** zumindest teilweise aus der Epoxidharz-Beschichtung vorsteht und mit der Epoxidharz-Versiegelung überdeckt ist.

15. Verwendung des Bodenschutzsystems gemäss einem der Ansprüche 13 oder 14 auf Brücken, Rampen, Treppen, Terrassen, Balkonen oder Parkdecks, oder in Garagen, Parkhäusern, Industriehallen oder Lagerhallen.
